# FASCICULE DE BREVET EUROPEEN

(11) **EP 4 385 830 B1**
(45) Date de publication et mention de la délivrance du brevet: **28.01.2026**
(21) Numéro de dépôt: 23216150.5
(22) Date de dépôt: 13.12.2023
(51) Int. Cl.: B60R 19/52, B60K 11/08

(54) **OBTURATEUR POUR GRILLE D' ENTRÉE D' AIR DE PARE-CHOCS DE VÉHICULE AUTOMOBILE**
VERSCHLUSS FÜR EIN LUFTEINLASSGITTER EINES KRAFTFAHRZEUGSTOSSFÄNGERS
SHUTTER FOR AN AIR INTAKE GRILLE OF A MOTOR VEHICLE BUMPER

(30) Priorité: 16.12.2022 FR 2213641
(43) Date de publication de la demande: 19.06.2024
(73) Titulaire: Stellantis Auto SAS, 78300 Poissy (FR)
(72) Inventeur: BOUMATIE, IMANE, 20270 SIDI MAAROUF (CASABLANCA) (MA); LAHSINI, JAOUAD, 20270 SIDI MAAROUF (CASABLANCA) (MA); BOUAJAJI, AYOUB, 20270 SIDI MAAROUF (CASABLANCA) (MA)
(74) Mandataire: BCIP

(56) Documents cités:
- DE-A1- 102020 203 726
- GB-A- 2 521 531
- IT-A1- TV20 120 152
- US-A1- 2022 001 820

## Description

L'invention concerne un obturateur de grille d'entrée d'air de véhicule automobile. Plus précisément, l'invention traite de la fixation d'un obturateur d'une grille d'entrée d'air de façade avant de véhicule automobile. L'invention a pour objet une façade avant de véhicule automobile. L'invention a également pour objet un véhicule automobile avec une grille au moins partiellement obturée.

Un modèle de véhicule automobile donné présente une façade avant avec un pare-chocs s'étendant sur toute sa largeur. Le pare-chocs comporte une peau de pare-chocs et doit respecter différents critères de réparabilité en fonction de la vitesse des chocs qu'elle est susceptible d'amortir. Par exemple pour un choc à faible vitesse, la façade avant est conçue pour absorber le choc par déformation élastique, donc sans nécessiter de réparation ultérieure. Par faible vitesse on entend un choc à vitesse inférieure ou égale à 10 km/h. Lors de ce choc, la peau de pare-chocs se déforme de manière élastique lors du contact avec l'obstacle, puis revient en position sans que ne subsiste de déformation permanente après éloignement de l'obstacle impliqué dans le choc.

Autour de la peau de pare-chocs, la carrosserie du véhicule présente des panneaux extérieurs complétant l'enveloppe externe. La peau de pare-chocs est positionnée de manière précise par rapport à ces panneaux extérieurs afin d'affiner les jeux de séparation. La maîtrise de la géométrie des jeux de séparation contribue à la qualité perçue du véhicule.

En complément des panneaux extérieurs, la façade avant comporte des dispositifs lumineux, dont les phares avant. Ces dispositifs lumineux permettent d'éclairer l'environnement, et d'émettre des signaux lumineux vers l'extérieur. Ces dispositifs lumineux jouxtent la peau de pare-chocs en définissant d'autres jeux de séparation ; également impliqués dans la qualité perçue du véhicule.

La façade avant présente par ailleurs des entrées d'air, dont généralement une entrée d'air supérieure et une entrée d'air inférieure. L'air capté via ces dernières permet d'alimenter en comburant un moteur à explosion, et de le refroidir grâce à un échangeur de chaleur dédié.

Un même modèle de véhicule automobile est couramment décliné en plusieurs motorisations, dont une motorisation thermique et une motorisation électrique. Dans le contexte de cette dernière, le besoin de refroidir le moteur via son échangeur de chaleur disparaît.

En circulation, la présence des grilles d'entrée d'air modifie la trainée du véhicule à cause de la déviation et des turbulences qu'elles impliquent. Cette trainée augmente la consommation en énergie primaire, et réduit l'autonomie. Or, l'autonomie est justement un point clé des véhicules automobiles électriques. Afin de réduire les pertes d'aérodynamisme liées au flux d'air traversant les grilles d'entrée d'air, il est pertinent de les obturer dans le cadre d'un véhicule électrique.

Cependant, cette modification implique des modifications spécifiques en fonction de la motorisation du véhicule. Le gain de production en grande série sur ce même modèle du véhicule diminue. Il existe donc un besoin de conserver un gain de production pour un même modèle de véhicule automobile disponible en plusieurs motorisations. Il existe un besoin de proposer un ensemble de façade avant avec grille qui soit compatible avec plusieurs types de motorisation et qui optimise la consommation d'énergie.

Le document EP3296135A1 présente un véhicule automobile muni d'un pare-chocs avant comprenant : une peau extérieure comportant une ouverture, un radiateur, un élément de structure supérieur, un élément de structure inférieur, un obturateur comportant un panneau monté entre le radiateur et la peau extérieure, l'obturateur étant monté avec l'élément de structure supérieur et l'élément de structure inférieur, l'obturateur étant apte à bloquer en partie l'ouverture. Le pare-chocs avant comprend une grille, située derrière l'ouverture, et permettant de protéger les organes mécaniques situés derrière la grille d'un impact avec un corps étranger. La grille comprend une pluralité de lamelles qui peuvent être droites et/ou croisées, de sorte à former un maillage. L'obturateur comprend une patte supérieure et une patte inférieure s'étendant respectivement depuis le panneau jusqu'aux éléments de structure en vue de leur fixation. Cet obturateur améliore la protection d'un piéton en cas de choc avec le véhicule automobile. Le document DE102020203726A1 divulgue un ensemble de façade avant d'après le préambule de la revendication 1.

L'invention a pour objectif de répondre à au moins un des problèmes ou inconvénients rencontrés dans l'art antérieur. En particulier, l'invention a pour objectif de rendre compatible un même ensemble de façade avant pour différentes versions d'un véhicule automobile. L'invention a également pour objectif d'optimiser la facilité de montage d'un obturateur et la sécurité en cas de choc piéton contre la façade avant d'un véhicule automobile.

Selon un premier aspect, l'invention propose un ensemble de façade avant de véhicule automobile, ledit ensemble de façade avant comprenant un élément de peau de pare-chocs, une ouverture d'entrée d'air délimitée par l'élément de peau de pare-chocs, une grille pour l'ouverture d'entrée d'air, ladite grille comprenant une pluralité de séparations définissant entre elles des mailles communiquant avec l'ouverture d'entrée d'air ; un obturateur comprenant au moins un panneau recouvrant la grille; remarquable en ce que l'obturateur comprend des moyens de fixation coopérant avec les séparations de la grille afin de fixer l'obturateur à la grille.

L'invention permet de monter l'obturateur directement sur la grille. Les moyens de fixation utilisent la géométrie propre de la grille afin de s'y accrocher. Dès lors, le montage du panneau utilise les surfaces présentes pour toute la gamme du véhicule automobile. Les mailles de la grille et ses séparations deviennent des moyens complémentaires coopérant avec les moyens de fixation.

L'ensemble de façade avant est modulaire puisqu'il permet d'y intégrer l'obturateur sans besoin d'adaptation. Tout l'ensemble de façade avant peut être utilisé pour plusieurs motorisations d'un même modèle de véhicule automobile, ce qui offre une économie d'échelle.

En complément, l'intégration de l'obturateur ne modifie pas la structure du véhicule. La souplesse programmée de la façade avant est peu ou pas modifiée. Dès lors, dans l'éventualité d'un choc piéton, l'ajout de l'obturateur n'y ajoute pas de point dur. La sécurité pour les piétons est préservée.

On aura bien compris que l'invention propose un pare-chocs avant dont la grille d'entrée d'air reçoit un obturateur directement fixé à la grille ; en particulier à ses mailles ; ou plus précisément le réseau qui les définit.

Préférentiellement, l'obturateur comprend une protrusion avant s'étendant depuis le au moins un panneau et dans une des mailles de la grille.

Préférentiellement, les moyens de fixation sont agencés dans ladite protrusion avant.

Préférentiellement, les moyens de fixation comprennent une fente dans laquelle est logé une des séparations.

Préférentiellement, les séparations comprennent au moins deux jeux de barres parallèles.

D'après l'invention, le au moins un panneau présente un orifice traversant ledit au moins un panneau, les moyens de fixation traversant longitudinalement le panneau via ledit orifice.

Préférentiellement, les moyens de fixation sont fixés à une face arrière du au moins un panneau.

Préférentiellement, les moyens de fixation comprennent une branche longitudinale épousant transversalement et/ou verticalement une des séparations ; et une tête de rétention en extrémité avant de la branche longitudinale, la tête de rétention comprenant une surface de guidage avant et une surface de butée arrière coopérant avec une des séparations.

Préférentiellement, l'ensemble de façade avant comprend un déflecteur inférieur sous l'élément de peau de pare-chocs, l'obturateur comprenant un bord inférieur avec des moyens d'ancrage reliés au déflecteur inférieur ; les moyens d'ancrage étant sous les moyens de fixation.

Préférentiellement, les moyens d'ancrage comprennent au moins un crochet d'ancrage.

Préférentiellement, au moins une des séparations comprend une surface avant, les moyens de fixation comprennent des moyens de rétention coopérant avec ladite surface avant.

Préférentiellement, l'ouverture d'entrée d'air est une ouverture d'entrée d'air inférieure, l'ensemble de façade avant comprenant en outre une ouverture supérieure au-dessus de l'ouverture d'entrée d'air inférieure ; l'élément de peau de pare-chocs séparant l'ouverture d'entrée d'air supérieure de l'ouverture d'entrée d'air inférieure ; l'obturateur étant verticalement à distance de l'ouverture d'entrée d'air supérieure.

Préférentiellement, le au moins un panneau comprend un panneau gauche et un panneau droit fermant l'ouverture d'entrée d'air, le panneau gauche et le panneau droit comprenant chacun un bord de jonction ; les bords de jonction étant joints l'un à l'autre.

Préférentiellement, les moyens de fixation s'étendent longitudinalement dans les mailles.

Préférentiellement, les moyens de fixation traversent longitudinalement au moins une des mailles de la grille.

Préférentiellement, l'obturateur comprend une portion inférieure avec des crochets de maintien coopérant avec des orifices de maintien formés dans le soubassement du véhicule automobile.

Préférentiellement, le panneau comprend une portion supérieure, les moyens de fixation étant agencés dans ladite portion supérieure.

Préférentiellement, la portion supérieure est rectangulaire.

Préférentiellement, les séparations sont des jonctions et/ou des liens telles des tiges.

Préférentiellement, l'obturateur est agencé en arrière de la grille.

Préférentiellement, le au moins un panneau s'étend transversalement sur au moins la moitié de l'ouverture.

Préférentiellement, les moyens de fixation comprennent au moins trois agrafes réparties sur le panneau et définissant des sommets d'un polygone.

Préférentiellement, la branche longitudinale comprend une languette de rétention.

Préférentiellement, les moyens de fixation comprennent au moins une agrafe.

Préférentiellement, l'ouverture d'entrée d'air est délimitée par le panneau extérieur.

Préférentiellement, le au moins un panneau est étanche.

Préférentiellement, le au moins un panneau s'étend verticalement et transversalement.

Préférentiellement, le au moins un panneau est généralement rectangulaire.

Préférentiellement, l'ouverture d'entrée d'air est une ouverture centrale.

Préférentiellement, le au moins un panneau épouse la grille ; notamment la face arrière de la grille.

Selon un autre aspect, l'invention propose un ensemble de peau de pare-chocs avant de véhicule automobile, l'ensemble de peau de pare-chocs comprend un élément de peau de pare-chocs, une ouverture délimitée par l'élément de peau de pare-chocs, une grille pour l'ouverture, ladite grille présentant une face avant, une face arrière, une pluralité de mailles ; un obturateur comprenant un panneau apte à fermer l'ouverture ; remarquable en ce que l'obturateur comprend en outre des moyens de fixation coopérant avec les mailles afin de fixer l'obturateur à la grille.

Selon un autre aspect, l'invention propose un véhicule automobile comprenant un ensemble de façade avant, remarquable en ce que l'ensemble de façade avant est conforme à l'invention.

Préférentiellement, le au moins un panneau comprend au moins un panneau en matériau plastique, les moyens de fixation comprennent au moins une agrafe métallique fixée audit au moins un panneau en matériau plastique.

L'invention sera bien comprise et d'autres aspects et avantages apparaîtront clairement à la lecture de la description qui suit, donnée en référence aux figures annexées et énumérées ci-dessous.
La figure 1 est une vue de face d'un véhicule automobile selon l'invention.
La figure 2 montre un obturateur d'ensemble de façade avant de véhicule automobile selon l'invention.
La figure 3 représente une protrusion d'un obturateur d'ensemble de façade avant de véhicule automobile selon l'invention.
La figure 4 est une coupe de moyens de fixation d'un obturateur d'ensemble de façade avant de véhicule automobile selon l'invention.

Dans la description qui suit, le terme « comprendre » est synonyme de « inclure » et n'est pas limitatif en ce qu'il autorise la présence d'autres éléments dans le véhicule automobile ou l'ensemble de façade avant auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale. Ces trois axes définissent un trièdre dont l'orientation est conservée au travers des figures.

Dans la présente description, les caractéristiques techniques sont définies dans la configuration de montage de l'ensemble de façade avant, à moins que le contraire ne soit mentionné explicitement.

Au travers de la description, les différentes figures utilisent les mêmes signes de référence pour désigner des entités identiques ou similaires.

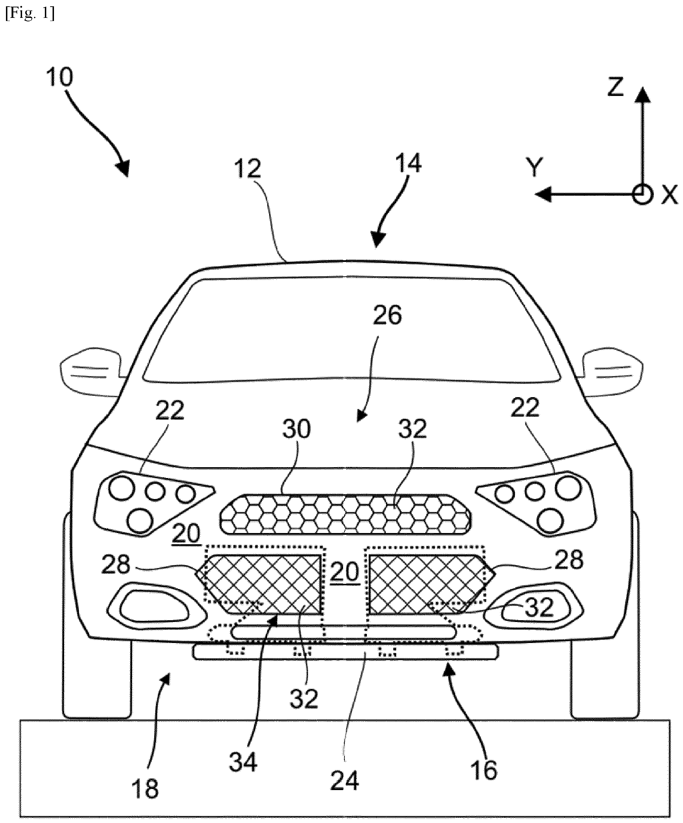

La figure 1 représente un véhicule automobile 10 selon l'invention. Le véhicule automobile 10 comprend des moyens de stockage d'énergie, telle une batterie électrique, et au moins un moteur (non représenté) adaptés pour entraîner ledit véhicule automobile 10. Le moteur est notamment un moteur électrique.

Le véhicule automobile 10 comprend une structure 12, également appelée caisse. La structure 12 forme une ossature et supporte différents organes du véhicule automobile 10, dont le moteur et des ouvrants. La structure 12 forme partiellement la carrosserie 14 du véhicule au niveau du toit, des ailes avant, des piliers. La carrosserie 14 forme l'enveloppe externe du véhicule automobile 10.

Le véhicule automobile 10 comprend en outre un ensemble de façade avant 16. L'ensemble de façade avant 16, en particulier chacun de ses éléments, est adapté pour résister à des chocs à des vitesses jusqu'à 10 km/h, préférentiellement jusqu'à 15 km/s, sans qu'il n'y ait besoin de remplacer de pièces spécifiques du véhicule, et notamment tout ou partie de la peau de pare-chocs 18. Ils sont également adaptés pour limiter l'importance des blessures dans l'éventualité d'un choc piéton.

La peau de pare-chocs 18 comprend plusieurs éléments de peau de pare-chocs 20. Les éléments de peau de pare-chocs 20 comprennent différents panneaux extérieurs dont la surface externe forme la carrosserie. Les éléments de peau de pare-chocs 20 sont fixés à la structure de l'ensemble de façade avant 16 ; dont une poutre supérieure et une poutre inférieure (non représentées).

L'ensemble de façade avant 16 comporte également au moins un dispositif lumineux 22. En l'occurrence deux dispositifs lumineux 22 sont prévus, de part et d'autre de la peau de pare-chocs 18. Chaque dispositif lumineux 22 est un dispositif lumineux réglementaire. Un dispositif lumineux 22 présente communément un boîtier et une paroi transparente à l'extérieur, qui abritent une ou plusieurs sources lumineuses. Les sources lumineuses sont aptes à éclairer l'environnement à distance du véhicule pour le confort de conduite, et aptes à émettre des signaux lumineux à l'attention des autres usagers.

L'ensemble de façade avant 16 comprend un déflecteur inférieur 24. Le déflecteur inférieur 24 comprend un panneau horizontal. Il s'étend transversalement, et est agencé en position centrale. Le déflecteur inférieur 24 est fixé sous les éléments de peau de pare-chocs 20. Il contribue à canaliser le flux d'air sous le véhicule automobile 10.

L'ensemble de façade avant 16 présente au moins une ouverture d'entrée d'air 26. La au moins une ouverture d'entrée d'air 26 est optionnellement une ouverture centrale suivant la direction transversale. Elle est au niveau du centre, ou attenante au centre du véhicule.

Par exemple, l'ensemble de façade avant 16 comprend une ouverture d'entrée d'air inférieure 28 et une ouverture d'entrée d'air supérieure 30. Selon une option, l'ouverture d'entrée d'air inférieure 28 est scindée transversalement. Elle peut offrir un flux de comburant lorsque le véhicule automobile 10 est décliné en sa version thermique. Un des éléments de peau de pare-chocs 20 peut les séparer transversalement. De même, l'un d'eux peut séparer l'ouverture d'entrée d'air inférieure 28 de l'ouverture d'entrée d'air supérieure 30. L'ouverture d'entrée d'air supérieure 30 offre un flux d'air pour une climatisation d'habitacle ; que le véhicule électrique soit à entraînement électrique, thermique ou hybride.

Au moins une ou chaque ouverture d'entrée d'air 26 comprend une grille 32. Une grille 32 forme généralement un écran perforé. Chaque grille 32 est généralement verticale, et généralement perpendiculaire à la direction longitudinale. Les grilles 32 ont des fonctions de guidage de flux d'air entrant dans le véhicule, et de protection des organes agencés derrière. Chaque grille 32 est apte à barrer au moins partiellement, et/ou à faire écran dans l'ouverture correspondante.

Chaque grille 32 présente un maillage avec des mailles séparées les unes des autres par des séparations (non représentées). Les séparations sont j ointes les unes aux autres afin de former un réseau. Les mailles peuvent avoir différentes formes. Elles peuvent reproduire un motif hexagonal, un motif à quadrilatères, un motif triangulaire. Tout type de maille peut être sélectionné en fonction des besoins de protection et d'entrée d'air.

Afin d'obturer certaines grilles 32, l'ensemble de façade avant 16 est équipé d'un obturateur 34. L'obturateur 34 est configuré pour fermer l'ouverture d'entrée d'air inférieure 28. L'obturateur 34 est agencé en arrière de la grille 32. Il s'oppose à l'entrée d'air via l'ouverture d'entrée d'air inférieure 28. Il limite ou empêche tout entrée d'air. Il peut totalement clore l'ouverture d'entrée d'air inférieure 28. Il est optionnellement verticalement à distance de l'ouverture d'entrée d'air supérieure 30.

Le véhicule automobile peut par exemple être un véhicule automobile particulier ou un véhicule automobile utilitaire.

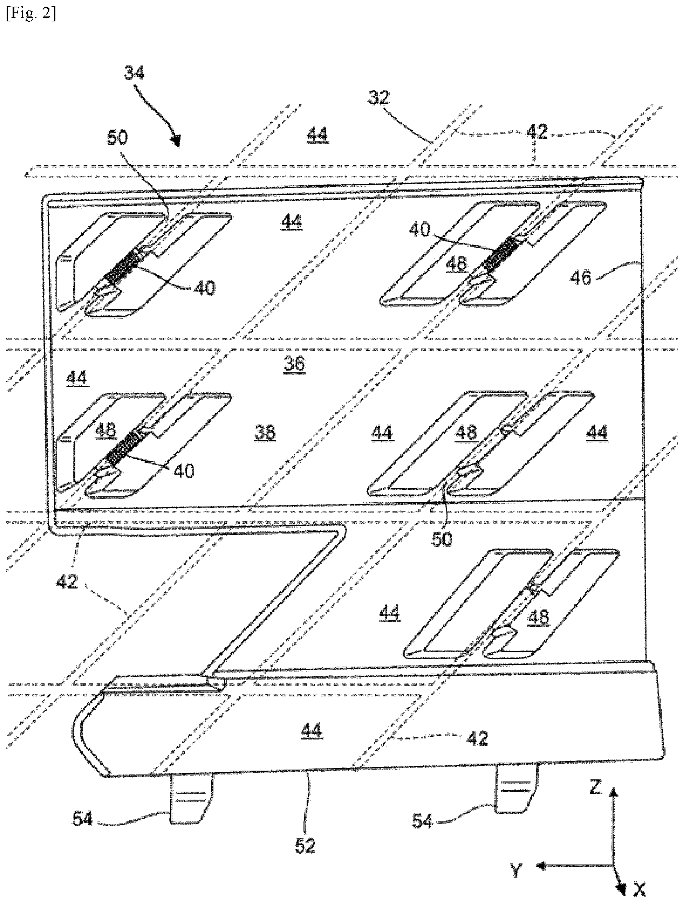

La figure 2 présente un obturateur 34 pour grille 32 d'ensemble de façade avant de véhicule automobile selon l'invention. Le véhicule automobile peut correspondre à celui présenté en relation avec la figure 1. La grille 32 est partiellement représentée, et en traits pointillés.

L'obturateur 34 comprend au moins un panneau 36, par exemple deux panneaux 36 dont un panneau gauche et un panneau droit. Les panneaux gauche et droit peuvent être symétriques. En l'occurrence le panneau droit est représenté. La suite de la description sera donnée en relation avec le panneau droit, toutefois elle s'applique au panneau gauche. Chaque panneau 36 s'oppose à un flux d'air rencontrant la grille qui habille l'entrée d'air associée (non représentée). Chaque panneau 36 s'étend transversalement sur au moins la moitié de l'ouverture associée ; préférentiellement sur toute l'ouverture associée.

Selon une option, le panneau gauche et le panneau droit comprennent chacun un bord de jonction 46. Les bords de j onction 46 sont j oints l'un à l'autre. Ainsi, ils permettent une meilleure obturation à leur interface. Les bords de jonction 46 sont des bords centraux. La configuration de l'obturateur 34 à plusieurs panneaux 36 facilite leur montage contre l'ouverture d'entrée d'air. Le démontage est plus simple, malgré l'accessibilité réduite de la façade avant par l'arrière.

Le panneau 36 est généralement étanche. Le panneau 36 s'étend verticalement et transversalement. Le panneau 36 est généralement rectangulaire. Il présente une encoche latérale afin d'épouser un dispositif fonctionnel de l'ensemble de façade avant.

Le panneau 36 présente une face avant formée par une surface avant 38. Du côté de la face avant, l'obturateur 34 présente des moyens de fixation 40 coopérant à la grille 32 afin de les lier, par exemple de manière réversible. Les comburants sont préférentiellement des moyens de fixation réversibles.

La grille 32 présente des séparations 42. Les séparations 42 forment au moins deux jeux de séparations 42, par exemple au moins deux jeux de barres parallèles. Elles délimitent entre elles des mailles 44, par exemple en forme de parallélogrammes. Elles peuvent être régulières. Dans la présente illustration, les séparations 42 sont des barres, ou des tiges. Elles peuvent être des plaquettes. Les séparations 42 sont des jonctions et/ou des liens tels des tiges. Les mailles 44 sont ouvertes vers l'ouverture associée. Les mailles 44 autorisent un flux d'air par l'ouverture en l'absence de l'obturateur 34.

En particulier, les moyens de fixation 40 coopérant avec la matière formant la grille, notamment ses mailles 44. Les moyens de fixation 40 engagent avec les séparations 42. Ils coopèrent par engagement de matière avec les séparations 42 de sorte à retenir l'obturateur 34 par la grille 32. Ainsi, les moyens de fixation s'accrochent directement à la grille, sans qu'il n'y ait besoin d'ajouter d'autres surfaces fonctionnelles.

L'obturateur 34 comprend une pluralité de protrusions avant 48. Les protrusions avant 48 s'étendent depuis le panneau 36 et dans une des mailles 44 de la grille 32. Les protrusions avant 48 sont agencées selon le maillage de la grille 32. Les moyens de fixation 40 sont associés à certaines des protrusions avant 48 ; par exemple les protrusions avant 48 en moitié supérieure.

Les moyens de fixation 40 comprennent une fente 50, préférentiellement plusieurs fentes 50. Les fentes 50 peuvent être des fentes de maintien. Les séparations 42 sont logées dans les fentes 50 qu'elles traversent. Les fentes 50 peuvent pincer les séparations 42 afin de les maintenir. Les fentes 50 assurent un positionnement entre la grille 32 et l'obturateur 34. Les fentes 50 séparent les protrusions avant 48 attenantes.

L'obturateur 34 comprenant un bord inférieur 52 avec des moyens d'ancrage 54. Le bord inférieur 52 peut être horizontal. Les moyens d'ancrage 54 sont reliés au déflecteur inférieur (non représenté), qui est lui-même fixé à un des éléments de peau de pare-chocs (non représenté). Les moyens d'ancrage 54 sont sous les moyens de fixation 40, par exemple verticalement à l'opposé. Ainsi, le maintien et la fixation de l'obturateur 34 sont assurés de deux manières. Par exemple, les moyens d'ancrage 54 comprennent au moins un crochet d'ancrage, notamment deux crochets d'ancrage engagés dans des ouvertures d'ancrage du déflecteur inférieur.

En d'autres termes, l'obturateur 34 comprend une portion inférieure avec des crochets de maintien coopérant avec des orifices de maintien formés dans le soubassement du véhicule automobile. Le panneau 36 comprend une portion supérieure, les moyens de fixation étant agencés dans ladite portion supérieure, préférentiellement la portion supérieure est rectangulaire.

Dans le présent mode de réalisation, les moyens de fixation 40 comprennent au moins trois agrafes réparties sur le panneau 36 et définissant des sommets d'un polygone. Ainsi, elles occupent des positions non alignées. Par conséquent leur maintien est plus robuste.

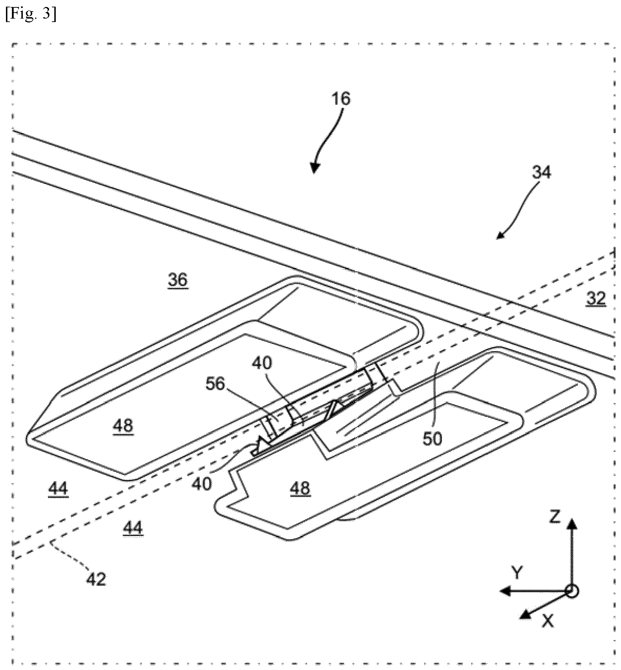

La figure 3 présente une vue de détail d'une protrusion avant 48 d'un ensemble de façade avant 16 de véhicule automobile. Le véhicule automobile peut correspondre à celui présenté en relation avec l'une des figures 1 à 2. L'obturateur 34 et son panneau 36 sont partiellement représentés.

L'obturateur 34 comprenant au moins un panneau 34 recouvrant la grille associée, en particulier sa face arrière. L'obturateur 34 comprend des moyens de fixation 40 solidaires du panneau 36. Les moyens de fixation 40 coopèrent avec une partie de la grille 32 qui est représentée par l'intermédiaire d'une de ses séparation 42. Ce contact avec la séparation 42 permet de fixer l'obturateur 34 à la grille 32.

L'obturateur 34 comprend au moins une protrusion avant 48 s'étendant vers l'avant, au travers de la grille 32. La protrusion avant 48 fait saillie depuis le panneau 36 et dans une des mailles de la grille 32. Elle forme une bosse sur la surface avant 38. L'obturateur 34 présente au moins une paire de protrusions avant 48, associées à une même jonction 42. Chaque protrusion avant 48 est dans une des mailles 44. Selon une interprétation, les paires de protrusions forment un plot coupé par une fente 50.

Les moyens de fixation 40 étant agencés dans l'une des protrusions avant 48. Les moyens de fixation 40 sont agencés dans la fente 50. Ils s'étendent vers l'autre des protrusions avant 48 de la paire.

Le panneau 36 présente un orifice 56. L'orifice 56 est traversant longitudinalement. L'orifice 56 forme un passage au travers du panneau 36. Les moyens de fixation 40 traversant longitudinalement le panneau 36 via cet orifice 56. L'orifice 56 traverse l'une des protrusions avant 48. Il y forme une découpe. Les moyens de fixation 40 sont ancrés à la face arrière du panneau 36.

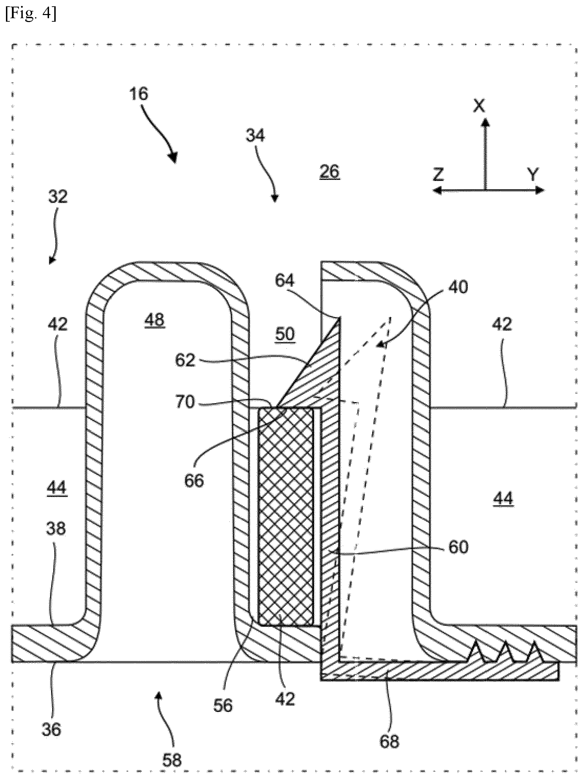

La figure 4 présente une coupe de moyens de fixation 40 d'un obturateur 34 au niveau d'un ensemble de façade avant 16 de véhicule automobile. Le véhicule automobile peut correspondre à celui présenté en relation avec l'une des figures 1 à 3.

L'ensemble de façade avant 16 comprend une grille 32 matérialisée par une pluralité de séparations 42 définissant entre elles des mailles 44 communiquant avec l'ouverture d'entrée d'air 26. L'obturateur 34 forme un masque limitant le flux d'air entrant par l'ouverture d'entrée d'air 26. Il comprend au moins un panneau 36 recouvrant la grille 32. Le panneau 36 épouse la grille 32 ; notamment la face arrière de ladite grille 32.

L'obturateur 34 comprend des moyens de fixation 40 coopérant avec les séparations 42 de la grille afin de fixer l'obturateur 34 à la grille 32 depuis sa face arrière. L'ouverture d'entrée d'air 26 est en avant de la grille 32 et de l'obturateur 34. Les moyens de fixation 40 s'étendent longitudinalement dans les mailles 44. Les moyens de fixation 40 traversent longitudinalement au moins une des mailles 44 de la grille 32.

L'obturateur 34 comprend au moins deux protrusions avant 48 s'étendant depuis le au moins un panneau 36. Les protrusions avant 48 sont creuses. Les protrusions avant 48 sont isolées l'une de l'autre par la fente 50. Les protrusions avant 48 s'étendent dans au moins une des mailles 44 de la grille 32 ; éventuellement dans deux mailles 44 attenantes. Les moyens de fixation 40 sont implantés dans une des protrusions avant 48. Ainsi, les moyens de fixation 40 sont protégés. Le risque qu'un projectile tel un gravillon les déverrouille est moindre.

Le panneau 36 présente un orifice 56 traversant le panneau 36 et la surface avant 38 d'où s'étendes les protrusions avant 48. Les moyens de fixation 40 croisent longitudinalement le panneau 36 via ledit orifice 56. Les moyens de fixation 40 sont fixés à une face arrière 58 du panneau 36.

Les moyens de fixation 40 comprennent au moins une agrafe, préférentiellement une pluralité d'agrafes réparties sur le panneau 36 et dans différentes protrusions avant 48 (une seule visible).

Les moyens de fixation 40 comprennent une branche longitudinale 60 épousant transversalement et/ou verticalement la séparation 42 dans la fente 50. La branche longitudinale 60 est munie d'une tête de rétention 62 en extrémité avant. La tête de rétention 62 forme l'extrémité avant des moyens de fixation 40. La tête de rétention 62 présente une surface de guidage avant 64 et une surface de butée arrière 66 coopérant avec la séparation 42 dans la fente 50. La surface de butée arrière 66 est une surface de rétention. Elle est en appui contre la face avant de la séparation 42 et donc de la grille 32.

Un intérêt de la tête de rétention 62 est qu'après montage, elle peut être manipulée avec un outil afin de libérer la séparation 42 qu'elle bloque. L'obturateur peut alors être démonté. Ainsi, l'invention facilite le montage et le démontage de ce dernier.

La séparation 42 comprend une surface avant 70. Les moyens de fixation 40 comprennent des moyens de rétention coopérant avec ladite surface avant 70. Par exemple, les moyens de rétention sont formés par la tête de rétention 62 ; notamment sa surface de butée arrière 66.

La branche longitudinale 60 forme une branche souple. Lors de l'insertion de la séparation 42 dans la fente 50 en vue du montage de l'obturateur 34, la séparation 42 glisse contre la tête de rétention 62 et la pousse latéralement ; dans l'une des protrusions avant 48. Alors, les moyens de fixation 40 se déforment (représentés en traits pointillés). La branche longitudinale 60 s'arque de manière élastique puis revient en position représentée en traits pleins. De même, la branche de fixation 68 se courbe.

L'obturateur 34 comprend avantageusement un matériau plastique. Le panneau 36 est réalisé par injection. Après démoulage, les moyens de fixation 40 y sont fixés. A titre d'illustration, la branche de fixation 68 est fixée à la face arrière 58 grâce à ses dents qui s'y enfoncent. D'autres modes de fixation sont envisageables. Ainsi, les moyens de fixation 40 sont fixés à une face arrière 58 du panneau 36.

## Revendications

1. Ensemble de façade avant (16) de véhicule automobile (10), ledit ensemble de façade avant (16) comprenant un élément de peau de pare-chocs (20), une ouverture d'entrée d'air (26) délimitée par l'élément de peau de pare-chocs (20), une grille (32) pour l'ouverture d'entrée d'air (26), ladite grille (32) comprenant une pluralité de séparations (42) définissant entre elles des mailles (44) communiquant avec l'ouverture d'entrée d'air (26) ; un obturateur (34) comprenant au moins un panneau (36) recouvrant la grille (32) ; l'obturateur (34) comprenant des moyens de fixation (40) coopérant avec les séparations (42) de la grille (32) afin de fixer l'obturateur (34) à la grille (32), **caractérisé en ce que** le au moins un panneau (36) présente un orifice (56) traversant ledit au moins un panneau (36), les moyens de fixation (40) traversant longitudinalement le panneau (36) via ledit orifice (56) ; préférentiellement, les moyens de fixation (40) sont fixés à une face arrière (58) du au moins un panneau (36)

2. Ensemble de façade avant (16) selon la revendication 1, **caractérisé en ce que** l'obturateur (34) comprend une protrusion avant (48) s'étendant depuis le au moins un panneau (36) et dans une des mailles (44) de la grille (32) ; préférentiellement les moyens de fixation (40) sont agencés dans ladite protrusion avant (48).

3. Ensemble de façade avant (16) selon l'une des revendications 1 à 2, **caractérisé en ce que** les moyens de fixation (40) comprennent une fente (50) dans laquelle est logé une des séparations (42), préférentiellement les séparations (42) comprennent au moins deux jeux de barres parallèles.

4. Ensemble de façade avant (16) selon l'une des revendications 1 à 3, **caractérisé en ce que** les moyens de fixation (40) comprennent une branche longitudinale (60) épousant transversalement et/ou verticalement une des séparations (42) ; et une tête de rétention (62) en extrémité avant de la branche longitudinale (60), la tête de rétention (62) comprenant une surface de guidage avant (64) et une surface de butée arrière (66) coopérant avec une des séparations (42).

5. Ensemble de façade avant (16) selon l'une des revendications 1 à 4, **caractérisé en ce que** l'ensemble de façade avant (16) comprend un déflecteur inférieur (24) sous l'élément de peau de pare-chocs (20), l'obturateur (34) comprenant un bord inférieur (52) avec des moyens d'ancrage (54) reliés au déflecteur inférieur (24) ; les moyens d'ancrage (54) étant sous les moyens de fixation (40) ;
préférentiellement les moyens d'ancrage (54) comprennent au moins un crochet d'ancrage.

6. Ensemble de façade avant (16) selon l'une des revendications 1 à 5, **caractérisé en ce qu'**au moins une des séparations (42) comprend une surface avant (70), les moyens de fixation (40) comprennent des moyens de rétention coopérant avec ladite surface avant (70).

7. Ensemble de façade avant (16) selon l'une des revendications 1 à 6, **caractérisé en ce que** l'ouverture d'entrée d'air (26) est une ouverture d'entrée d'air inférieure (28), l'ensemble de façade avant (16) comprenant en outre une ouverture supérieure (30) au-dessus de l'ouverture d'entrée d'air inférieure (28) ; l'élément de peau de pare-chocs (20) séparant l'ouverture d'entrée d'air supérieure (30) de l'ouverture d'entrée d'air inférieure (28) ; l'obturateur (34) étant verticalement à distance de l'ouverture d'entrée d'air supérieure (30).

8. Ensemble de façade avant (16) selon l'une des revendications 1 à 7, **caractérisé en ce que** le au moins un panneau (36) comprend un panneau gauche et un panneau droit fermant l'ouverture d'entrée d'air (26), le panneau gauche et le panneau droit comprenant chacun un bord de jonction (46); les bords de jonction (46) étant joints l'un à l'autre.

9. Véhicule automobile (10) comprenant un ensemble de façade avant (16), **caractérisé en ce que** l'ensemble de façade avant (16) est conforme à l'une des revendications 1 à 8 ; préférentiellement le au moins un panneau (36) comprend au moins un panneau en matériau plastique, les moyens de fixation (40) comprennent au moins une agrafe métallique fixée audit au moins un panneau en matériau plastique.

## Patentansprüche

1. Frontfassadenbaugruppe (16) für ein Kraftfahrzeug (10), wobei die Frontfassadenbaugruppe (16) ein Stoßstangenhautelement (20), eine Lufteintrittsöffnung (26), die durch das Stoßstangenhautelement (20) begrenzt wird, ein Gitter (32) für die Lufteintrittsöffnung (26) umfasst, wobei das Gitter (32) eine Vielzahl von Trennwänden (42) umfasst, die dazwischen Maschen (44) definieren, die mit der Lufteintrittsöffnung in Verbindung stehen (26); einen Verschluss (34), der mindestens eine Platte (36) aufweist, die das Gitter (32) abdeckt; wobei der Verschluss (34) Befestigungsmittel (40) aufweist, die mit den Trennwänden (42) des Gitters (32) zusammenwirken, um den Verschluss (34) an dem Gitter (32) zu befestigen, **dadurch gekennzeichnet, dass** die mindestens eine Platte (36) eine Öffnung (56) aufweist, die durch die mindestens eine Platte (36) verläuft, wobei die Befestigungsmittel (40) in Längsrichtung durch die Platte (36) hindurchtreten Öffnung (56); vorzugsweise sind die Befestigungsmittel (40) an einer Rückseite (58) der mindestens einen Platte (36) befestigt

2. Frontfassadenanordnung (16) nach Patentanspruch 1, **dadurch gekennzeichnet, dass** der Verschluss (34) einen vorderen Vorsprung (48) umfasst, der sich von der mindestens einen Platte (36) und in eine der Maschen (44) des Gitters (32) erstreckt; vorzugsweise sind die Befestigungsmittel (40) in dem vorderen Vorsprung (48) angeordnet.

3. Frontfassadenbaugruppe (16) nach einem der Ansprüche 1 bis 2, **dadurch gekennzeichnet, dass** die Befestigungsmittel (40) einen Schlitz (50) umfassen, in dem eine der Trennwände (42) untergebracht ist, vorzugsweise die Trennwände (42) mindestens zwei Sätze paralleler Stäbe umfassen.

4. Frontfassadenbaugruppe (16) nach einem der Ansprüche 1 bis 3, **dadurch gekennzeichnet, dass** die Befestigungsmittel (40) einen Längsschenkel (60) umfassen, der sich quer und/oder vertikal an eine der Trennwände (42) anschmiegt; und einen Haltekopf (62) am vorderen Ende des Längsschenkels (60), wobei der Haltekopf (62) eine vordere Führungsfläche (64) und eine hintere Anschlagfläche (66) umfasst, die mit einer der Trennwände (42) zusammenwirkt.

5. Frontfassadenbaugruppe (16) nach einem der Ansprüche 1 bis 4, **dadurch gekennzeichnet, dass** die Frontfassadenbaugruppe (16) eine untere Ablenkplatte (24) unter dem Stoßfängerhautelement (20) aufweist, wobei der Verschluss (34) eine untere Kante (52) mit mit der unteren Ablenkplatte (24) verbundenen Verankerungsmitteln (54) aufweist; wobei die Verankerungsmittel (54) unter den Befestigungsmitteln (40) liegen; vorzugsweise die Verankerungsmittel (54) mindestens einen Verankerungshaken enthalten.

6. Frontfassadenbaugruppe (16) nach einem der Ansprüche 1 bis 5, **dadurch gekennzeichnet, dass** mindestens eine der Trennwände (42) eine Frontfläche (70) umfasst, wobei die Befestigungsmittel (40) Rückhaltemittel umfassen, die mit 40 der Frontfläche (70) zusammenwirken.

7. Frontfassadenbaugruppe (16) nach einem der Ansprüche 1 bis 6, **dadurch gekennzeichnet, dass** die Lufteintrittsöffnung (26) eine untere Lufteintrittsöffnung (28) ist, wobei die Frontfassadenbaugruppe (16) ferner eine obere Öffnung (30) oberhalb der unteren Lufteintrittsöffnung (28) aufweist; wobei das Stoßfängerhautelement (20) die obere Lufteintrittsöffnung (30) von der unteren Lufteintrittsöffnung trennt (28); wobei der Verschluss (34) vertikal in einem Abstand von der oberen Lufteintrittsöffnung (30) angeordnet ist.

8. Frontfassadenbaugruppe (16) nach einem der Ansprüche 1 bis 7, **dadurch gekennzeichnet, dass** die mindestens eine Platte (36) eine linke Platte und eine rechte Platte umfasst, die die Lufteinlassöffnung (26) verschließen, wobei die linke Platte und die rechte Platte jeweils eine Verbindungskante (46) umfassen; wobei die Verbindungskanten (46) miteinander verbunden sind.

9. Kraftfahrzeug (10) mit einer vorderen Fassadenanordnung (16), **dadurch gekennzeichnet, dass** die vordere Fassadenanordnung (16) einem der Ansprüche 1 bis 8 entspricht; vorzugsweise die mindestens eine Platte (36) mindestens eine Kunststoffplatte umfasst, wobei die Befestigungsmittel (40) mindestens eine Metallklammer umfassen, die an der mindestens einen Kunststoffplatte befestigt ist.

## Claims

1. Front facade assembly (16) of a motor vehicle (10), said front facade assembly (16) comprising a bumper skin item (20), an air entry opening (26) delimited by the bumper skin item (20), a grid (32) for the air entry opening (26), said grid (32) comprising a plurality of separations (42) defining between them scales (44) communicating with the entry opening air valve (26); a shutter (34) comprising at least one sign (36) covering the grid (32); the shutter (34) comprising fixing means (40) cooperating with the separations (42) of the grid (32) in order to fix the shutter (34) to the grid (32), wherein the at least one sign (36) has an orifice (56) passing through the said at least one sign (36), the fixing means (40) passing longitudinally through it sign (36) via said orifice (56); preferably, the fixing means (40) are fixed to a rear face (58) of the at least one sign (36).

2. Front facade assembly (16) according to claim 1, wherein the shutter (34) comprises a front protrusion (48) extending from the at least one sign (36) and in one of the scales (44) of the grid (32); preferably, the fixing means (40) are arranged in said front protrusion (48).

3. Front facade assembly (16) according to one of Claims 1 to 2, **characterised in that** the fixing means (40) comprise a slot (50) in which one of the separations (42) is housed, preferably the separations (42) comprise at least two sets of parallel bars.

4. Front facade assembly (16) according to one of Claims 1 to 3, **characterised in that** the fixing means (40) comprise a longitudinal branch (60) matching one of the separations (42) transversely and/or vertically; and a retention head (62) at the front end of the longitudinal branch (60), the retention head (62) comprising a front guide surface (64) and a rear stop surface (66) cooperating with one of the separations (42).

5. Front facade assembly (16) according to one of Claims 1 to 4, **characterised in that** the front facade assembly (16) comprises a lower deflector (24) under the item of the bumper skin (20), the shutter (34) comprising a lower edge (52) with anchoring means (54) connected to the lower deflector (24); the anchoring means (54) being under the fixing means (40); preferably the anchoring means (54) comprise at least one hook anchorage.

6. Front facade assembly (16) according to one of Claims 1 to 5, **characterised in that** at least one of the separations (42) comprises a front surface (70), the fixing means (40) comprise retention means cooperating with 40 of the said front surface (70).

7. Front facade assembly (16) according to one of claims 1 to 6, wherein the air entry opening (26) is a lower air entry opening (28), the front facade assembly (16) further comprising an upper opening (30) above the lower air entry opening (28); the bumper skin item (20) separating the upper air entry opening (30) from the entry opening lower air (28); the shutter (34) being vertically spaced from the upper air entry opening (30).

8. Front facade assembly (16) according to one of Claims 1 to 7, **characterised in that** the at least one sign (36) comprises a left-hand sign and a right-hand sign closing the air entry opening (26), the left-hand sign and the right-hand sign each comprising a joining edge (46); the joining edges (46) being joined to one another.

9. Motor vehicle (10) comprising a front facade assembly (16), **characterised in that** the front facade assembly (16) is in accordance with one of Claims 1 to 8; preferably the at least one sign (36) comprises at least one sign of plastic material, the fixing means (40) comprise at least one metal clip fixed to the said at least one sign of plastic material.
